Europäisches Patentamt

European Patent Office

Office européen des brevets

(11) Publication number: **0 386 868 B1**

## EUROPEAN PATENT SPECIFICATION

(45) Date of publication of patent specification: **20.09.95**  (51) Int. Cl.⁶: **C01F  11/18**, C09C 1/02

(21) Application number: **90300414.1**

(22) Date of filing: **15.01.90**

---

54 **Low-density calcium carbonate agglomerate.**

---

(30) Priority: **17.01.89 US 298085**

(43) Date of publication of application:
**12.09.90 Bulletin  90/37**

(45) Publication of the grant of the patent:
**20.09.95 Bulletin  95/38**

(84) Designated Contracting States:
**BE CH DE FR GB IT LI NL SE**

(56) References cited:
**FR-A- 1 472 725**
**FR-A- 2 292 747**
**US-A- 2 263 656**
**US-A- 3 615 811**

73 Proprietor: **MINERALS TECHNOLOGIES INC.**
**The Chrysler Building,**
**405 Lexington Avenue**
**New York, New York 10174 (US)**

72 Inventor: **Damiano, John**
**3100, Cory Terrace**
**Easton, PA (US)**
Inventor: **Lehman, Richard Long**
**107 Ridgeview Drive**
**Bell Mead, NJ (US)**
Inventor: **Griffin, Charles Richard**
**R.D.1, Box 1424**
**Mt. Bethel, PA (US)**

74 Representative: **Gaunt, Robert John et al**
**Stevens, Hewlett & Perkins**
**1 Serjeants' Inn**
**Fleet Street**
**London EC4Y 1LL (GB)**

Rank Xerox (UK) Business Services
(3.10/3.09/3.3.3)

**Description**

This invention relates to a low density, substantially water-insoluble, particulate material and to a process for the preparation thereof. More particularly, the invention is concerned with a process for the preparation of a low density calcium carbonate-containing agglomerate and the product of such process.

Calcium carbonate, commonly known as chalk, exists in nature as the minerals aragonite, calcite and vaterite and, in a precipitated or purified form, is widely used as a filler in the manufacture of paint, rubber, plastics, paper, dentifrices and other products; and also in pharmaceuticals and cosmetics. It is also used therapeutically as an antacid, a dietary supplement and an antidiarrheal agent.

It is generally available commercially in two crystalline forms, viz: orthorhombic aragonite having a melting point of 825°C. (dec.) and a density of 2.83 g/ml., and hexagonal or rhombohedral calcite having a melting point of 1339°C. (102.5 atm.) and a density of 2.71 g/ml.

FR-A-2292747 describes a calcium carbonate containing product which also includes an acid salt polyphosphate.

Surprisingly, it has now been found that a lightweight, i.e. low density, agglomerate based on calcium carbonate and having a density of no more than 1.0 g/ml., can be prepared from precipitated calcium carbonate by subjecting the precipitated calcium carbonate, without or with an alkali metal polyphosphate, preferably a sodium polyphosphate, to certain heating and mechanical processing steps.

In accordance with the present invention there is provided a process for the preparation of a low density, substantially water-insoluble, particulate material which comprises forming an agueous slurry containing precipitated calcium carbonate having an initial average particle size of about 0.5 to 4.0 $\mu$m and 0 to 25% by weight, based on the weight of the calcium carbonate, of a dissolved alkali metal polyphosphate, drying said slurry to provide a granular material, heating the dried material to a temperature within the range of 200° to 800°C. and maintaining the temperature for a period of one to two hours, cooling the resulting agglomerate and crushing the material to a particle size of 297 $\mu$m to 88 $\mu$m (-50 to +170 mesh U.S. Standard Sieve), to provide the desired particulate material having a particle density of no more than 1.0 g/ml. and a resistance against breakdown in water.

The step of drying the slurry may be performed by means of static bed drying, fluid bed drying or spray drying.

As an alternative to obtaining a low density agglomerate, a process is provided for using calcium carbonate with an average particle size of from about 0.5 to about 4.0 $\mu$m and from 0 to about 40 percent by weight (based on the weight of calcium carbonate) of a dissolved alkali metal polyphosphate, by drying in a spray dryer at appropriate conditions to produce the desired particle size, screening at appropriate screen sizes to obtain a particle size of from about 297 $\mu$m to 37 $\mu$m (-50 to +400 mesh U.S. Standard Sieve), heating to a range of from about 200°C to about 800°C, maintaining at this temperature from about one to about two hours, and cooling to provide the desired particulate material having a particulate density not greater than about 1.0 g/ml and resistance to breakdown in water.

A pelletizing device is used to obtain the desired size fraction of low density agglomerate when the size required is larger than 297 $\mu$m (-50 mesh).

Preferably the polyphosphate is a sodium or potassium polyphosphate, especially sodium hexametaphosphate.

The invention also provides a low density, substantially water-insoluble, calcium carbonate-containing, particulate material prepared by a process as described above and having a particle size of 149 $\mu$m to 44 $\mu$m (-100 to +325 mesh U.S. Standard Sieve), a particle density of not more than 1.0 g/ml. and a resistance against breakdown in water. More preferably, the particle size is from 297 $\mu$m to 88 $\mu$m (-50 to +170 mesh).

A preferred particulate material according to the invention is one having a particle size of 297 $\mu$m to 149 $\mu$m (-50 to +100 mesh U.S. Standard Sieve) and a particle density of 0.59 to 0.79 g/ml.

Preferably the particulate material comprises about 2 to 25% sodium hexametaphosphate and the balance calcium carbonate.

As used herein, the expression "resistance against breakdown in water" means that the particulate material or agglomerate of the present invention retains its integrity after prolonged contact with water and an evaluation of this characteristic is presented in the experimental results appearing hereinafter.

The low density particulate material of the present invention is particularly useful as a filler or bulking agent in polymers, paper, construction materials or other applications where a lightweight bulking agent is desired; and is also useful in certain food products where a lightweight aggregate of food-grade quality is desired.

The low density particulate is also useful as a porous media to act as a carrier for fragrances, flavors, insecticides, fertilizers, catalysts and the like, for use in cosmetics, agriculture, the chemical industry and the food industry. The porosity of the product makes it useful as an absorbant.

As indicated hereinabove, calcium carbonate has been widely used as a filler or bulking agent in various industrial products, in pharmaceuticals and in food. However, there are some applications wherein a material of relatively low density is required and conventional calcium carbonate, having a density of 2.7 to 2.83 g/ml., is not suitable.

Since calcium carbonate has many desirable chemical and physical properties which render it suitable as a bulking agent and also it is readily available and easy to purify, it was considered worthwhile to ascertain whether it could be subjected to a density-reducing treatment whereby the resulting product, while retaining the normal advantages associated with calcium carbonate, would be suitable for those applications wherein a low density material is essential or desirable.

Initial experiments established that the desired lightweight agglomerates may be obtained by adding a suitable polyphosphate, particularly Glass H sodium hexametaphosphate (commercially available from FMC Corporation), to precipitated calcium carbonate followed by heat treatment. The process was tested with varying amounts of sodium polyphosphate and it was further discovered that carrying out the heat treatment, cooling and pulverizing procedure under controlled conditions provides the desired low density material even without the addition of the polyphosphate.

In a preferred embodiment of the invention, about 2 to 25%, preferably 10 to 20%, by weight (dry solids) of an appropriate sodium polyphosphate is admixed with synthetic calcium carbonate. Albacar brand calcium carbonate is preferably used because the unique morphology of the particles is especially beneficial in contributing to low density. The sodium polyphosphate may be selected from metaphosphates, pyrophosphates or orthophosphates. Metaphosphates are preferred, particularly sodium hexametaphosphate.

The polyphosphate solution is added to the calcium carbonate and the resulting slurry is mixed vigorously by hand or with a mechanical mixer until a uniform consistency is achieved; indicating homogeneous distribution of the polyphosphate throughout the calcium carbonate. The damp mixture is pressed into disks, for example, by using a hydraulic press. A suitable size for said disks is about 8cm. in diameter. The pressure is controlled to produce disks of a desired strength and density. The disks are then crushed into granules and the resulting particulate material is fired at a temperature of about 200° to 800°C., preferably about 400° to 600°C., in either a gas or an electric kiln, and soaked for about one hour. After cooling the particulate material was crushed to the desired particle size for a given application. For example, an aggregate of food-grade quality may be prepared with a particle size in the range of 841 $\mu$m to 88 $\mu$m (-20 to +170 mesh U.S. Standard Sieve).

In addition to preparing agglomerates by preparing a pressed cake from a homogeneous slurry of calcium carbonate and a binder, followed by drying, crushing, firing at 200°C to 800°C, and sizing by screening, agglomerates are also made by spray drying the slurry at appropriate conditions to obtain a particle size of from about 250 $\mu$m to 37 $\mu$m (-60 to +400 mesh U.S. Standard Sieve). This material is then screened and fired at a temperature of from about 200°C to 800°C to make a water resistant product.

For agglomerates larger than 297 $\mu$m (-50 mesh), pelletization processes are used to make low density PCC products.

The following Examples illustrate preferred embodiments of the process of the invention and the resulting lightweight agglomerates.

Example 1

Small Batch with 20% by weight polyphosphate binder

32g. of calcium carbonate (Albacar 5970) having an average particle size of about 1.9 $\mu$m was placed in a mixing container. 8g. of Glass H brand of sodium hexametaphosphate was placed in a 100 ml. beaker and dissolved in 15 ml. of deionized distilled water. The polyphosphate solution was added to the calcium carbonate and the slurry was stirred to a homogeneous mixture. The damp mixture was pressed into disks in a hydraulic press, dried at a temperature of about 100°C., and then crushed to a granular state. The granules were placed in a 100 ml. crucible, covered, and heated to a temperature of about 600°C. at the rate of approximately 250°C./h, and soaked for one hour and cooled. The resulting agglomerates were further crushed to a particle size of 841 $\mu$m to 297 $\mu$m (-20 mesh to +50 mesh). The resulting product comprised discrete particles of calcium carbonate having a measured porosity of 60% and a particle density of no more than about 1.0 g/ml. The product was quite strong, low in dust and resistant against breakdown in water.

Example 2

Larger Batch with 10% by weight polyphosphate binder

1800 g. of calcium carbonate (Albacar 5970) having an average particle size of about 1.9 $\mu$m was placed in a mixing container. 200 g. of Glass H brand of sodium hexametaphosphate was placed in a one liter container and dissolved in 400 ml. of deionized distilled water. The polyphosphate solution was added to the calcium carbonate and the slurry was stirred to a homogeneous mixture in a mechanical mixer. The damp mixture was pressed into disks in a hydraulic press, dried at a temperature of about 100°C., and then crushed to a granular state. The granules were placed in a container of dimensions 30 x 30 x 12 cm. The container was covered with a sheet of alumina and placed in a gas-fired kiln and heated to a temperature of 400°C. at the rate of approximately 250°C./h. The material was soaked for one hour and cooled. The resulting agglomerates were further crushed to a particle size of 297 $\mu$m to 149 $\mu$m (-50 mesh to +100 mesh). The resulting product comprised discrete particles of calcium carbonate having a measured porosity of 60% and a particle density of no more than about 1.0 g/ml. The product was quite strong, low in dust and resistant against breakdown in water.

Example 3

200 g. of anhydrous sodium hexametaphosphate (Technical grade, Occidental Chemical Corporation, NY) was dissolved in 400 ml. of deionized water. The resulting solution was added over a two minute period to 1000 g of Albacar 5970 (precipitated calcium carbonate, average particle size 1.9 $\mu$m, Pfizer Inc., New York, NY) while the batch was continuously blended in a mixer (Model N-50, Hobart Corporation, Troy, Ohio). This composition represents a 20% by weight level addition of sodium hexametaphosphate to Albacar 5970 (20 g sodium hexametaphosphate/100 g Albacar 5970). An additional 109 grams of water was then added to the batch over a ten minute period as blending continued, in order to obtain a granular material. The granular material was removed from the mixer and dried at 125°C for 16 hours. The density of the material was no more than about 1.0 g/ml.

Portions of the dried material were subjected to thermal treatment in the following manner. Samples were placed in porcelain crucibles and separately heated in a kiln to temperatures of 200°C, 400°C and 600°C. Samples were held at temperature for two hours.

After cooling, the samples were separately crushed using a mortar and pestle. Each material was screened to obtain a fraction that was smaller than 297 $\mu$m [(through) 50 mesh U.S. Standard Sieve] and larger than 149 $\mu$m [(on) 100 mesh U.S. Standard Sieve]. A 30 g sample of each fraction was washed with deionized water on a 149 $\mu$m (100 mesh) vibrating screen (U.S. Standard Sieve). The material remaining on the screen was collected, dried at 125°C and weighed. The percentage of material retained on the screen is shown in Table I for each treatment temperature. These values provide an indication of the integrity of the dry screened material with brief exposure to water as well as the amount of fines, i.e. smaller than 149 $\mu$m (-100 mesh) material, that may have been attached to the 149 $\mu$m (+100 mesh) material after dry screening. During dry screening some fine material will always be attached to the surface of the larger particles.

The material retained on the screen was subjected to further testing. A 10 g sample was placed in 200 g of deionized water and stirred for 0.5 hours. The sample was then washed on a 149 $\mu$m (100 mesh) screen (U.S. Standard Sieve). The material remaining on the screen was collected, dried at 125°C. and weighed. The percentage retained is shown in Table II. These values provide an indication of the integrity, or resistance to breakdown, of the agglomerates after prolonged contact with water.

Example 4

A series of samples similar to those in Example 3 was prepared by first dissolving 100 g of sodium hexametaphosphate in 200 g of deionized water. This solution was added over a two minute period to 1000 g of Albacar 5970 while the batch was continuously blended in a mixer. This composition represents a 10% by weight level of addition of sodium hexametaphosphate to Albacar 5970 (10 g sodium hexametaphosphate/100 g of Albacar 5970). An additional 311 g of deionized water was added to the batch over a ten minute period as blending continued in order to obtain a granular material. This material was then processed in a manner identical to that described in Example 3. Results are set out in Tables I and II.

Example 5

This Example illustrates the preparation of a lightweight agglomerate according to the invention without the additon of a polyphosphate binder. A series of samples was prepared by adding 525 g of deionized water to 1000 g of Albacar 5970 over ten minutes while the batch was continuously blended in a mixer. The resultant granular material was processed in a manner similar to that described in Example 3 and 4. Results are set out in Tables I and II.

The particle densities of the samples prepared in accordance with the procedure illustrated in Example 3, 4 and 5 are given in Table III.

Example 6

Large Batch with 10% Glass H Metaphosphate (solids to solids basis)

237.5kg (524lbs) of food-grade calcium carbonate having an averge particle size of about 1.9 $\mu$m was added to 709 lbs of water containing 26.3 kg (58 lbs) of Glass H polymetaphosphate in a stainless steel vessel. This 45% solids slurry was mixed well with a high shear mixer until a smooth homogeneous consistency was obtained. The slurry was then fed to a spray dryer at an appropriate feed rate and temperature required to leave less than 2% moisture.

the spherical agglomerates obtained were screened to 125 $\mu$m to 63 $\mu$m (-120 to +230 mesh) and then heated at 300°C, 350°C, 400°C, and 450°C for 2 hours. The resulting products comprised discrete particles of calcium carbonate having a bulk density of 0.5 g/cc. Based on the standard void volume of -40% for closely sized spheres the sphere density was estimated to be about 0.83 g/cc. See Table V. From this the pore volume is estimated to be approximately 65%. The product had very good particle integrity, exhibited low dusting and showed excellent resistance to degradation in water. See Table IV. The product was an off-white to light beige color and demonstrated good free-flow properties.

## TABLE I

### Amount of Material Retained After Washing (wt. %)
### Through a 149 μm (100 Mesh) Screen

- Sample particle size: 297 μm (-50 mesh), 149 μm (+ 100 mesh) dry screened
- Original sample weight: 30 g

| Thermal Treatment Temperature (°C) | Amount of Sodium Hexametaphosphate Added To Albacar 5970 Wt. % | | |
|---|---|---|---|
| | Example 3 | Example 4 | Example 5 |
| | 20 | 10 | 0 |
| 125 (Dried**) | 48.2 | 40.4 | 19.9 |
| 200 | 57.3 | 43.9 | 47.7 |
| 400 | 67.1 | 43.8 | 35.8 |
| 600 | 59.0 | 56.7 | 40.7 |

** Drying step only and not within scope of invention.

5

## TABLE II

### Amount of Material Retained After Washing (wt. %)
### Through a 149 µm (100 Mesh) Screen

. Sample particle size: 149 µm (+100 mesh) prepared by wet screening (material retained from tests represented in Table I

. Original sample weight: 10 g

| Thermal Treatment Temperature (°C) | Amount of Sodium Hexametaphosphate Added To Albacar 5970 Wt. % | | |
|---|---|---|---|
| | Example 3 | Example 4 | Example 5 |
| | 20 | 10 | 0 |
| 125 (Dried**) | 42.5 | 26.5 | 0 |
| 200 | 82.1 | 80.9 | 46.8 |
| 400 | 82.0 | 70.7 | 37.7 |
| 600 | 80.1 | 92.0 | 82.5 |

** Drying step only and not within scope of invention.

### TABLE III

| Density* of Agglomerate Samples | | | |
|---|---|---|---|
| Thermal Treatment Temperature (°C) | Amount of Sodium Hexametaphosphate Added To Albacar 5970 Wt. % | | |
| | Example 3 | Example 4 | Example 5 |
| | 20 | 10 | 0 |
| 125 (Dried**) | 1.0 | 1.0 | 1.0 |
| 200 | .7105 | .6260 | .6043 |
| 400 | .6263 | .6265 | .5972 |
| 600 | .6834 | .7834 | .6136 |

* All density values were determined by mercury porosimetry and are in g/ml.

The results tram Table I and II above show that particulate material of the invention displays a general trend toward improved integrity (reduced breakdown) in water as phosphate levels and temperatures increase. It is interesting to note that at 600°C the integrity of the agglomerates were similar, and very good, at all polyphosphate levels and even without any polyphosphate.

Table IV

| Density Values of Various Low Density Agglomerate Samples | | | |
|---|---|---|---|
| Thermal Treatment | Example 6 (Glass H) | | |
| | Density (g/ml) | | |
| | Real | Bulk | Agglomerate[1] |
| 300 °C at 2 hrs | 2.4 | 0.50 | 0.83 |
| 250 °C at 2 hrs | - | - | - |
| 400 °C at 2 hrs | - | - | - |
| 450 °C at 2 hrs | 2.5 | 0.50 | 0.83 |

[1]Agglomerate density is estimated from the assumption that there is approximately 40% void volume for closely sized packed spheres.

Table V

| Percentage of 125 $\mu$m to 63 $\mu$m (-120 to +230) Product Retained after Heat Treatment plus Dry and Wet Screening | | |
|---|---|---|
| Thermal Treatment | Example 6 | |
| | Glass H Polyphosphate | |
| | Dry | Wet |
| 2 hours at 300 °C | 98 | 92 |
| 2 hours at 350 °C | 98 | 95 |
| 2 hours at 400 °C | 97 | 96 |
| 2 hours at 450 °C | 95 | 94 |

## Claims

1. A process for the preparation of a low density, substantially water-insoluble, particulate material which comprises forming an aqueous slurry containing precipitated calcium carbonate having an initial average particle size of about 0.5 to 4.0 $\mu$m and 0 to 25% by weight, based on the weight of the calcium carbonate, of a dissolved alkali metal polyphosphate, drying the slurry to provide a granular material, heating the dried material to a temperature within the range of 200° to 800°C and maintaining the temperature for a period of one to two hours, and cooling the resulting agglomerate to provide a particulate material having a particle density of no more than 1.0 g/ml and a resistance against breakdown in water.

2. A process according to claim 1, in which the polyphosphate is a sodium or potassium polyphosphate.

3. A process according to claim 2, in which the polyphosphate is sodium hexametaphosphate.

4. The process according to claim 1 wherein the step of drying the slurry is performed using means selected from the group consisting of static bed drying, fluid bed drying and spray drying.

5. A process according to claim 1, in which the heating step is carried out at a temperature within the range of 400° to 600°C.

6. The process according to claim 4 further comprising a step of sizing the particulate material.

7. The process according to claim 6 wherein the step of sizing is performed at a time selected from the group consisting of between the steps of drying the slurry and heating the dried material; and after the step of cooling the agglomerate.

8. The process according to claim 7 wherein the step of sizing the material is performed using means selected from the group consisting of screening; and crushing and screening.

9. The process according to claim 8 wherein screening is selected as the means of sizing the material when the slurry is spray dried.

10. The process according to claim 8 wherein screening and crushing is selected as the means of sizing the material when the slurry is static bed or fluid bed dried.

11. The process according to claim 8 further comprising the step of pelletizing the agglomerate to produce a particulate material having a size larger than 297 $\mu$m (-50 mesh (U.S. Standard Sieve).

12. The process according to claim 11 wherein the particulate material has a particle size in the range of from about 149 $\mu$m to about 44 $\mu$m (about -100 to about +325 mesh (U.S. Standard Sieve).

**Patentansprüche**

1. Verfahren zur Herstellung von weitgehend wasserunlöslichem, partikulärem Material niedriger Dichte, welches Verfahren umfaßt:

Erzeugen einer wässrigen Aufschlämmung, enthaltend ausgefälltes Calciumcarbonat mit einer mittleren Anfangsteilchengröße von 0,5...4,0 Mikrometer und bezogen auf das Gewicht des Calciumcarbonats 0 %...25 Gewichtsprozent aufgelöstes Alkalimetallphosphat;

Trocknen der Aufschlämmung, um ein körniges Material zu schaffen;

Erhitzen des getrockneten Materials auf eine Temperatur im Bereich von 200 °...800 °C und Halten der Temperatur für eine Dauer von zwei Stunden; sowie

Kühlen des resultierenden Agglomerats, um ein partikuläres Material zu schaffan, das eine Teilchendichte von nicht mehr als 1,0 g/ml hat und gegen Zerfall in Wasser beständig ist.

2. Verfahren nach Anspruch 1, bei welchem das Polyphosphat ein Natrium- oder Kaliumphosphat ist.

3. Verfahren nach Anspruch 2, bei welchem das Polyphosphat Natriumhexametaphosphat ist.

4. Verfahren nach Anspruch 1, bei welchem der Schritt des Trocknens dar Aufschlämmung unter Anwendung von Maßnahmen ausgeführt wird, ausgewählt aus der Gruppe, bestehend aus: Trocknen im statischen Bett, Fließbett-Trocknen und Sprühtrocknen.

5. Verfahren nach Anspruch 1, bei welchem der Schritt des Erhitzens bei einer Temperatur im Bereich von 400 °...600 °C ausgeführt wird.

6. Verfahren nach Anspruch 4, ferner umfassend den Schritt des Klassierens des partikulären Materials.

7. Verfahren nach Anspruch 6, bei weiche der Schritt das Klassierens zu einem Zeitpunkt ausgeführt wird, ausgewählt zwischen den Schritten des Trocknens der Aufschlämmung und des Erhitzens des getrockneten Materials, bzw. nach dem Schritt des Kühlens des Agglomerats.

8. Verfahren nach Anspruch 7, bei welchem der Schritt des Klassierens des Materiale unter Anwendung von Maßnahmen ausgeführt wird, ausgewählt aus Sieben, bzw. Zerkleinern und Sieben.

9. Verfahren nach Anspruch 8, bei welchem als Maßnahme für das Klassieren des Materials das Sieben ausgewählt wird. wenn die Aufschlämmung sprühgetrocknet wird.

10. Verfahren nach Anspruch 8, bei welchem als Maßnahme für das Klassieren des Materials das Sieben und Zerkleinern ausgewählt wird, wenn die Aufschlämmung im statischen Bett oder im Fließbett getrocknet wird.

**11.** Verfahren nach Anspruch 8, ferner umfassend den Schritt des Pelletierens des Agglomerats, um ein partikuläres Material mit einer Teilchengröße von mehr als 297 Mikrometer (-50 Maschen nach US-Standardsieb) zu schaffen.

**12.** Verfahren nach Anspruch 11, bei welchem das partikuläre Material eine Teilchengroße im Bereich von etwa 149 ...44 Mikrometer (-100 bis etwa +325 Maschen nach US-Standardsieb) hat.

**Revendications**

**1.** Procédé de préparation d'une substance particulaire basse densité, sensiblement insoluble dans l'eau, lequel comprend la formation d'une suspension aqueuse épaisse contenant du carbonate de calcium précipité ayant une dimension initiale moyenne de particule d'environ 0,5 à 4,0 $\mu$m et 0 à 25% en poids, par rapport au poids de carbonate de calcium, d'un polyphosphate de métal alcalin dissous, le séchage de la suspension épaisse pour obtenir une substance granulaire, le chauffage de la substance séchée à une température comprise dans la plage de 200° à 800°C et le maintien à cette température pendant une durée de 1 à 2 h, et le refroidissement de l'agglomérat obtenu pour obtenir une substance particulaire ayant une densité de particule inférieure ou égale à 1,0 g/ml et une résistance à la désintégration dans l'eau.

**2.** Procédé selon la revendication 1, dans lequel le polyphosphate est un polyphosphate de sodium ou de potassium.

**3.** Procédé selon la revendication 2, dans lequel le polyphosphate est de l'hexamétaphosphate de sodium.

**4.** Procédé selon la revendication 1, dans lequel l'étape de séchage de la suspension épaisse est mise en oeuvre à l'aide de moyens sélectionnés dans le groupe constitué par le séchage en lit statique, le séchage en lit fluidisé et le séchage par pulvérisation.

**5.** Procédé selon la revendication 1, dans lequel l'étape de séchage est mise en oeuvre à une température comprise dans la plage de 400° à 600°C.

**6.** Procédé selon la revendication 4, lequel comprend en outre une étape de calibrage de la matière particulaire.

**7.** Procédé selon la revendication 6, dans lequel l'étape de calibrage est mise en oeuvre à un moment sélectionné dans le groupe constitué par l'intervalle entre les étapes de séchage de la suspension épaisse et de chauffage de la substance séchée et le moment faisant suite à l'étape de refroidissement de l'agglomérat.

**8.** Procédé selon la revendication 7, dans lequel l'étape de calibrage de la substance est mise en oeuvre à l'aide de moyens sélectionnés dans le groupe constitué par le tamisage, et le broyage et le tamisage.

**9.** Procédé selon la revendication 8, dans lequel le tamisage est sélectionné en tant que moyen de calibrage de la substance lorsque la suspension épaisse est séchée par pulvérisation.

**10.** Procédé selon la revendication 8, dans lequel le mode tamisage et broyage est sélectionné en tant que moyen de calibrage de la substance lorsque la suspension épaisse est séchée en lit statique ou en lit fluidisé.

**11.** Procédé selon la revendication 8, lequel comprend en outre l'étape de bouletage de l'agglomérat pour produire une substance particulaire de dimension supérieure à 297 $\mu$m (-50 mesh) (U.S. Standard Sieve).

**12.** Procédé selon la revendication 11, dans lequel la substance particulaire a une dimension de particule comprise dans la plage d'environ 149 $\mu$m à environ 44 $\mu$m (environ-100 à environ +325 mesh) (U.S. Standard Sieve).